# FASCICULE DE BREVET EUROPEEN

(11) **EP 3 891 405 B1**
(45) Date de publication et mention de la délivrance du brevet: **26.10.2022**
(21) Numéro de dépôt: 19829294.8
(22) Date de dépôt: 21.11.2019
(51) Int. Cl.: F16B 21/02

(54) **DISPOSITIF DE FIXATION DE TYPE QUART DE TOUR AXIALEMENT CENTRE**
AXIAL ZENTRIERTE VIERTELDREHUNGSBEFESTIGUNGSVORRICHTUNG
AXIALLY CENTRED QUARTER-TURN FASTENING DEVICE

(30) Priorité: 03.12.2018 FR 1872246
(43) Date de publication de la demande: 13.10.2021
(73) Titulaire: A. Raymond et Cie, 38000 Grenoble (FR)
(72) Inventeur: SICOT, Mikaël, 38760 VARCES ALLIERES ET RISSET (FR); LAMOUREUX, David, 38100 GRENOBLE (FR)
(74) Mandataire: IP Trust
(86) Numéro de dépôt international: PCT/FR2019/052773
(87) Numéro de publication internationale: WO 2020/115390

(56) Documents cités:
- WO-A1-2013/165948

## Description

### DOMAINE DE L'INVENTION

La présente invention concerne un dispositif de fixation destiné à solidariser une pièce à un support. La pièce peut constituer une butée, portée par le dispositif de fixation, que l'on souhaite fixer par exemple à un ouvrant d'un véhicule automobile tel qu'un capot, une porte de coffre, un hayon.

### ARRIERE PLAN TECHNOLOGIQUE DE L'INVENTION

On connaît des documents WO2013165948, FR2894304, EP2016293 des dispositifs de fixation à quart de tour destinés à solidariser une pièce à un support. Ces dispositifs sont formés d'une tête et d'un pied de maintien portant des éléments de retenue pour maintenir le dispositif de fixation solidaire du support. Le pied de maintien, ainsi que les éléments de retenue sont introduits à travers une ouverture du support jusqu'à ce que la tête prenne appui sur une première face du support. Le verrouillage du dispositif de fixation est assuré en lui appliquant une rotation, par exemple d'un quart de tour. Dans cette position de verrouillage, les éléments de retenue sont en appui contre l'autre face du support et maintiennent alors le dispositif de fixation solidaire de celui-ci.

Toutefois, suivant les dimensions exactes des pièces, un jeu est susceptible d'exister entre le pied de maintien et le bord de l'ouverture. L'existence de ce jeu peut conduire à déplacer dans le plan du support la position du dispositif de fixation, ce qui peut être gênant. En effet, cela peut conduire au mauvais montage de la pièce au support en engendrant un désaxage de sa position ainsi qu'une mauvaise tenue du montage.

### OBJET DE L'INVENTION

Un but de l'invention est de proposer un dispositif de fixation du type quart de tour, adressant tout ou partie des inconvénients de l'état de la technique. Elle vise notamment à fournir un dispositif de fixation pouvant être positionné dans une ouverture du support présentant une variété de dimensions tout en prévenant le déplacement du dispositif dans le plan du support, quelle que soit la dimension exacte de l'ouverture parmi la variété de dimensions possibles.

### BREVE DESCRIPTION DE L'INVENTION

En vue de la réalisation de ce but, l'objet de l'invention propose un dispositif de fixation, du type quart de tour, d'une pièce à un support, le dispositif de fixation comprenant : une tête portant la pièce, la tête étant destinée à prendre appui sur une première face du support; un pied de maintien relié à la tête et s'étendant selon un axe principal, le pied de maintien étant configuré pour pénétrer axialement dans une ouverture du support, l'ouverture présentant un bord périphérique, pour ainsi disposer le dispositif de fixation dans une position d'insertion présentant une première orientation angulaire, le pied de maintien comportant au moins une languette flexible de retenue pour prendre appui sur une deuxième face du support lorsque le dispositif de fixation est déplacé angulairement de la position d'insertion à une position de verrouillage présentant une deuxième orientation angulaire.

Selon l'invention, la languette flexible porte un ergot pour combler l'espace susceptible d'exister entre le pied de maintien et le bord de l'ouverture et ainsi recentrer le dispositif de fixation dans l'ouverture lorsqu'il est déplacé angulairement de la position d'insertion à la position de verrouillage.

Selon d'autres caractéristiques avantageuses et non limitatives de l'invention, prises seules ou selon toute combinaison techniquement réalisable :
- la tête comprend au moins un élément de blocage, destiné à occuper l'ouverture du support lorsque le dispositif de fixation est en position de verrouillage;
- l'élément de blocage est disposé avec un angle de 90° par rapport à la languette flexible;
- l'élément de blocage consiste en une paire de nervures parallèle reliée au pied de maintien ;
- la base de la languette flexible de retenue est solidaire d'un plateau en saillie de la surface externe du pied de maintien et disposé dans un plan perpendiculaire à l'axe principal ;
- l'extrémité de la languette flexible est libre et peut se déformer selon une direction perpendiculaire au support ;
- la languette flexible possède une inclinaison initiale non orthogonale au plateau ;
- le pied de maintien est muni d'au moins une nervure de guidage ;
- l'ergot présente une base le reliant à la languette flexible et un sommet, la dimension du sommet étant plus petite que la dimension de la base.

### BREVE DESCRIPTION DES FIGURES

D'autres caractéristiques et avantages de l'invention ressortiront de la description détaillée de l'invention qui va suivre en référence aux figures annexées sur lesquels :
- la figure 1 représente une vue d'ensemble d'un dispositif de fixation d'une pièce à un support conforme à l'invention ;
- la figure 2a représente l'étape d'insertion du dispositif de fixation ;
- la figure 2b représente l'étape de verrouillage du dispositif de fixation ;
- la figure 3a représente une coupe longitudinale du dispositif de fixation en transition de la position de livraison à la position de verrouillage pour une ouverture de diamètre plus grand que le pied de maintien ;
- la figure 3b représente une coupe transversale du dispositif de fixation en transition de la position de livraison à la position de verrouillage au niveau des éléments de blocage pour une ouverture de diamètre plus grand que le pied de maintien ;
- la figure 4a représente une coupe longitudinale du dispositif de fixation en transition de la position de livraison à la position de verrouillage pour une ouverture de diamètre adapté au pied de maintien ;
- la figure 4b représente une coupe transversale du dispositif de fixation en transition de la position de livraison à la position de verrouillage au niveau des éléments de blocage pour une ouverture de diamètre adapté au pied de maintien.

### DESCRIPTION DETAILLEE DE L'INVENTION

Par souci de simplification de la description à venir, les mêmes références sont utilisées pour des éléments identiques ou assurant la même fonction. Les figures sont des représentations schématiques qui, dans un objectif de lisibilité, ne sont pas à l'échelle.

### Description du dispositif de fixation

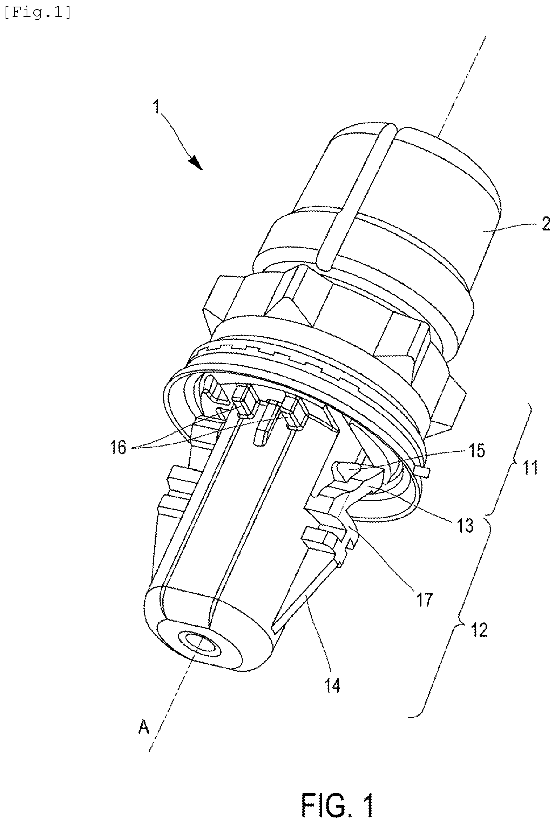

La figure 1 représente une vue d'ensemble du dispositif de fixation 1, conforme à l'invention. Ce dispositif de fixation 1 est composé d'une tête 11 et d'un pied de maintien 12, relié à la tête 11.

La tête 11 porte la pièce 2 que l'on souhaite fixer au support 3, qui peut être de nature variée, ici une butée. La tête est également destinée à prendre appui sur une première face du support 3. Avantageusement, et comme cela est le cas sur l'exemple représenté sur les figures, elle peut être munie d'un joint d'étanchéité, destiné à venir prendre appui sur le support, si cela est nécessaire ou utile pour l'application visée.

Le pied de maintien 12, de forme générale cylindrique, s'étend selon un axe principal A et porte ici deux languettes flexibles de retenue 13, diamétralement opposées l'une de l'autre. La base de la languette flexible de retenue 13 est solidaire d'un plateau 17 en saillie de la surface externe du pied de maintien 12 et disposé dans un plan perpendiculaire à l'axe principal A. L'extrémité de la languette flexible 13 est libre et peut se déformer selon une direction perpendiculaire au support 3 pour prendre appui sur une deuxième face du support lorsque l'on verrouille, par rotation, le dispositif de fixation 1. Ainsi, la languette flexible 13 permet de verrouiller le dispositif de fixation 1 au support 3 en effectuant une rotation axiale, par exemple une rotation du type quart de tour, après que le pied de maintien 12 ait été inséré dans l'ouverture 31. On précise que par l'expression « du type quart de tour », on désigne dans la présente demande toute rotation du dispositif de fixation 1 de 90°, plus ou moins 20° vis-à-vis du support. Avantageusement, les languettes flexibles 13 possèdent une inclinaison initiale non orthogonale au plateau 17, selon des directions inverses d'une languette à l'autre, pour favoriser leurs déformations dans une direction privilégiée de rotation du dispositif 1.

L'invention n'est nullement limitée à un pied de maintien portant précisément deux languettes flexibles, et on pourrait envisager de former un dispositif de fixation présentant un nombre différent de telles languettes.

Les languettes flexibles 13 portent chacune un ergot 15 pour combler l'espace qui est susceptible d'exister entre le pied de maintien 12 et le bord de l'ouverture 31 et ainsi recentrer le dispositif de fixation 1 dans l'ouverture 31 lorsqu'il est déplacé angulairement de la position d'insertion à la position de verrouillage, comme cela sera détaillé avec plus de détail dans la suite de cette description.

Le pied de maintien 12 représenté sur les figures est également muni de deux nervures de guidage 14. Ces nervures de guidage 14 sont orientées selon l'axe principal A, et s'étendent respectivement de l'extrémité du pied de maintien 12 jusqu'au plateau 17. Les nervures de guidage 14 permettent de guider l'insertion du pied de maintien 12 dans l'ouverture du support pour placer le dispositif 1 dans sa position d'insertion, selon une première orientation angulaire vis-à-vis de ce support. Dans cette première position angulaire, les parties saillantes portées par le pied de maintien 12 (nervures de guidage 14, plateau 17, languettes flexibles 13) sont alignées avec des encoches de l'ouverture, ce qui permet donc leur passage sous la première face du support.

Dans l'exemple représenté, la tête 11 est munie, sur la face destinée à prendre appui sur le support, de deux éléments de blocage 16 diamétralement opposés l'un de l'autre et disposé ici, à 90° par rapport aux languettes flexibles 13. Les éléments de blocage 16 sont saillants de la tête 11 et sont également reliés au pied de maintien 12 en prenant ici la forme d'une paire de nervures parallèles, tel que cela est représenté sur la figure 1. Les éléments de blocage 16 sont en contact avec la première face du support lorsque le dispositif de fixation est en position d'insertion sur le support, et sont logés dans les encoches lorsque le dispositif 1 est en position de verrouillage, de sorte à bloquer la rotation d'axe principal du dispositif de fixation 1 après son verrouillage.

De manière avantageuse, le dispositif de fixation 1 est formé par injection d'un matériau plastique. Le support 3 peut quant à lui être de nature varié, il peut s'agir, par exemple, d'une matière plastique ou d'un matériau métallique tel qu'une plaque en tôle.

### Utilisation du dispositif de fixation

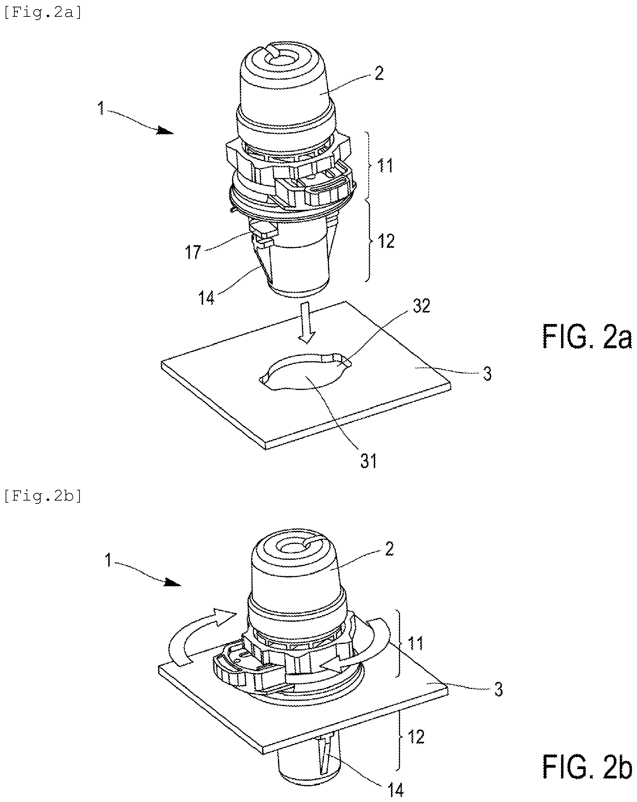

Les figures 2a et 2b représentent le fonctionnement général du dispositif de fixation.

Sur la figure 2a on a représenté l'étape d'insertion du dispositif de fixation 1 dans l'ouverture 31 prévue du support 3. Au cours de cette étape, le pied de maintien 12 pénètre dans l'ouverture 31 pour venir mettre en contact la tête 11 avec la première surface du support 3. Comme on l'a déjà évoqué, l'ouverture 31 présente des encoches 32 configurées pour permettre le passage des languettes flexibles 13, et des nervures de guidage 14 si celles-ci sont effectivement présentes. Ces encoches 32 sont également prévues pour loger les éléments de blocage 16 lorsque le dispositif de fixation est en position de verrouillage. A l'issue de l'étape représentée sur la figure 2a, le dispositif de fixation 1 est en position d'insertion et possède une première orientation angulaire. Les éléments de blocage, s'ils sont prévus, reposent sur la première face du support.

Dans une seconde étape, représenté par la figure 2b, on applique une rotation d'un quart de tour, ou de toute autre valeur d'angle selon la configuration choisie, au dispositif de fixation pour le placer en position de verrouillage dans lequel il présente une deuxième orientation angulaire. Durant la rotation, les languettes flexibles 13 entrent en contact avec le bord périphérique 32 des encoches 31, se déforment et passent sous le support 3. En position de verrouillage, les languettes flexibles 13 sont en appui contre la deuxième face du support 3, retenant ainsi le dispositif 1 assemblé au support 3. Dans cette position, les éléments de blocage 16 sont logés dans les encoches 32 et bloquent toute rotation excessive du dispositif de fixation 1 par rapport au support 3 qui tendrait à replacer ce dispositif en position d'insertion.

Pour désassembler le dispositif de fixation 1 il suffit d'effectuer dans l'ordre inverse les étapes mentionnées au préalable. Il s'agit donc dans un premier temps d'appliquer un effort de traction sur le dispositif de fixation pour déloger les éléments de blocage 16 des encoches puis d'entrainer en rotation le dispositif pour réaligner les languettes 13 avec les encoches 32, selon la première orientation angulaire de la position d'insertion.

### Fonctionnement du recentrage

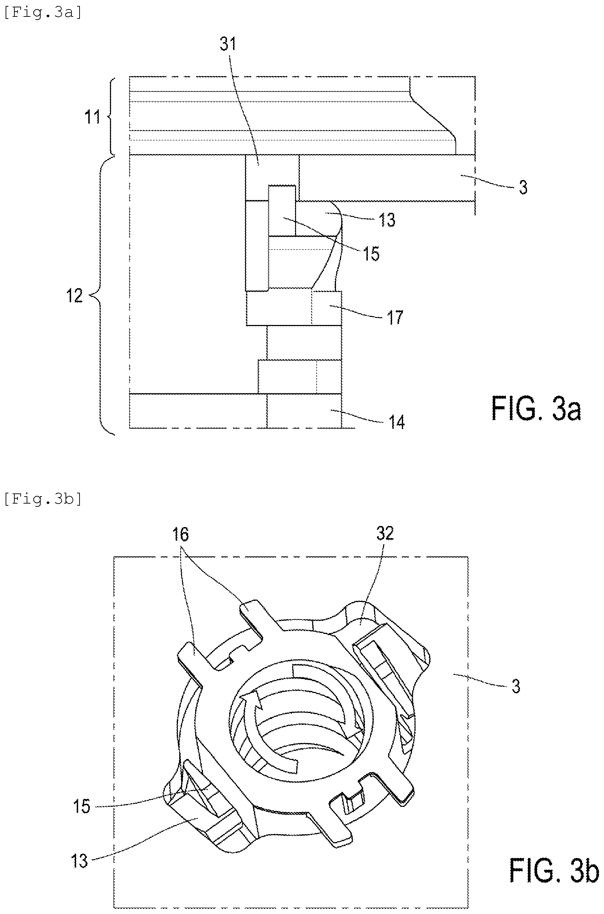

On a représenté sur les figures 3a et 3b, un exemple de mise en œuvre dans lequel l'ouverture 31 présente une dimension plus grande que le pied 12 créant donc un espace libre entre le bord périphérique de l'ouverture 31 et le pied 12. Le dispositif de fixation 1 est donc susceptible de bouger dans le plan du support 3, après son verrouillage, ce qui est problématique. Pour parer à ce problème, comme on l'a brièvement déjà évoqué, l'invention prévoit de munir la languette flexible 13 d'un ergot 15.

L'ergot 15 est formé sur la face de la languette flexible 13 susceptible d'être en contact avec la deuxième face du support 3. L'ergot 15 occupe une portion de la surface de la languette flexible 13, située du côté du pied de maintien 12, et s'étend vers la tête 11 du dispositif de fixation 1. Cet ergot 15 a pour but de combler l'espace libre entre le pied de maintien 12 et le bord périphérique de l'ouverture 31, comme cela est représenté sur les figures 3a et 3b. Il a pour effet de recentrer le dispositif de fixation 1 dans l'ouverture 31 au cours de la rotation de verrouillage, et bloquer ainsi tout mouvement excessif du dispositif de fixation 1 dans le plan du support 3 dans la position de verrouillage.

De manière optionnelle, l'ergot 15 peut être profilé de sorte que ses dimensions à son sommet soient plus petites qu'à sa base. Ce profil à l'avantage de permettre l'insertion d'au moins le sommet de l'ergot 15 pour un espace étroit entre le bord périphérique de l'ouverture et le pied du dispositif, et, d'une manière plus générale, permettre les effets de recentrage pour une amplitude étendue de cet espace.

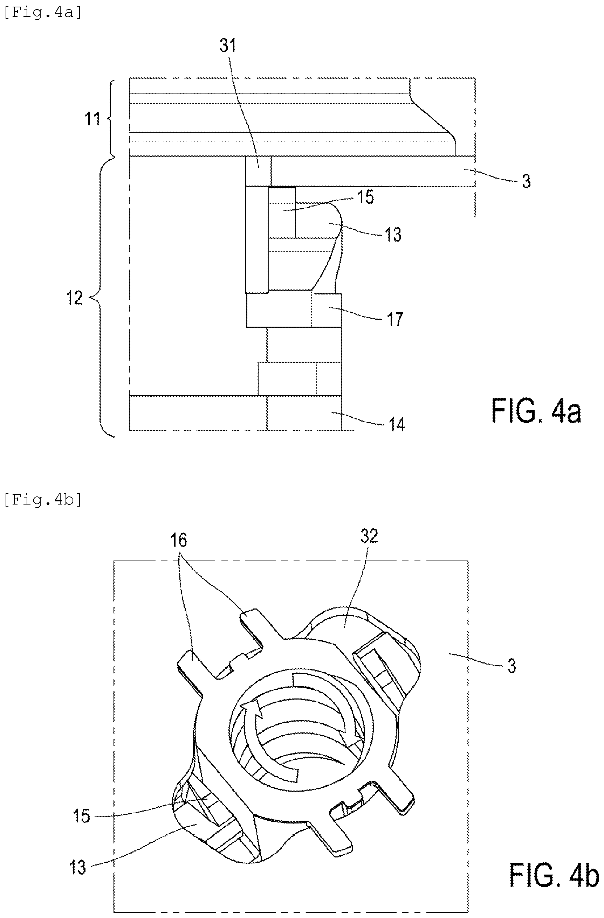

Dans le cas où l'ouverture 31 présente une dimension parfaitement ajustée au pied de maintien 12, et comme cela est représenté sur les figures 4a et 4b, il n'existe pas de jeu suffisant entre le pied et la bordure périphérique de l'ouverture 31 pour permettre à l'ergot 15 de s'y insérer au cours de la rotation de verrouillage. Dans ce cas, l'ergot 15 se comporte de manière similaire aux languettes flexibles 13 et glisse donc sous le support 3 pour venir en butée contre sa surface lorsque le dispositif de fixation 1 est en position de verrouillage.

L'invention présente ainsi l'avantage de fournir un dispositif de fixation pouvant être positionné dans une ouverture du support présentant une variété de dimensions tout en prévenant le déplacement du dispositif dans le plan du support, quelle que soit la dimension exacte de l'ouverture parmi la variété de dimensions possibles.

Bien entendu l'invention n'est pas limitée au mode de mise en œuvre décrit et représenté et on peut y apporter des variantes de réalisation sans sortir du cadre de l'invention tel que défini par les revendications.

## Revendications

1. Dispositif de fixation (1), du type quart de tour, d'une pièce (2) à un support (3), le dispositif de fixation (1) comprenant :
- une tête (11) portant la pièce (2), la tête (11) étant destinée à prendre appui sur une première face du support (3) ;
- un pied de maintien (12) relié à la tête (11) et s'étendant selon un axe principal (A), le pied de maintien (12) étant configuré pour pénétrer axialement dans une ouverture (31) du support (3), l'ouverture présentant un bord périphérique, pour ainsi disposer le dispositif de fixation (1) dans une position d'insertion présentant une première orientation angulaire, le pied de maintien (12) comportant au moins une languette flexible de retenue (13) pour prendre appui sur une deuxième face du support (3) lorsque le dispositif de fixation (1) est déplacé angulairement de la position d'insertion à une position de verrouillage présentant une deuxième orientation angulaire ;
le dispositif de fixation (1) étant **caractérisé en ce que** la languette flexible (13) porte un ergot (15) pour combler l'espace susceptible d'exister entre le pied de maintien (12) et le bord de l'ouverture (31) et ainsi recentrer le dispositif de fixation (1) dans l'ouverture (31) lorsqu'il est déplacé angulairement de la position d'insertion à la position de verrouillage.

2. Dispositif de fixation (1) selon la revendication précédente dans lequel la tête (11) comprend au moins un élément de blocage (16), destiné à occuper l'ouverture (31) du support (3) lorsque le dispositif de fixation (1) est en position de verrouillage.

3. Dispositif de fixation selon la revendication précédente dans lequel l'élément de blocage (16) est disposé avec un angle de 90° par rapport à la languette flexible (13).

4. Dispositif de fixation (1) selon l'une des revendications 2 à 3 dans lequel l'élément de blocage (16) consiste en une paire de nervures parallèle reliée au pied de maintien (13) .

5. Dispositif de fixation (1) selon l'une des revendications précédentes dans lequel la base de la languette flexible de retenue (13) est solidaire d'un plateau (17) en saillie de la surface externe du pied de maintien (12) et disposé dans un plan perpendiculaire à l'axe principal (A).

6. Dispositif de fixation (1) selon l'une des revendications précédentes dans lequel l'extrémité de la languette flexible (13) est libre et peut se déformer selon une direction perpendiculaire au support (3).

7. Dispositif de fixation (1) selon l'une des revendications précédentes dans lequel la languette flexible (13) possède une inclinaison initiale non orthogonale au plateau (17).

8. Dispositif de fixation (1) selon l'une des revendications précédentes dans lequel le pied de maintien (12) est muni d'au moins une nervure de guidage (14).

9. Dispositif de fixation selon l'une des revendications précédentes dans lequel l'ergot (15) présente une base le reliant à la languette flexible (13) et un sommet, la dimension du sommet étant plus petite que la dimension de la base.

## Patentansprüche

1. Befestigungsvorrichtung (1), der Vierteldrehungsart, eines Teils (2) an einem Träger (3), die Befestigungsvorrichtung (1) umfassend:
- einen Kopf (11), der das Teil (2) trägt, wobei der Kopf (11) dazu bestimmt ist, sich auf eine erste Fläche des Trägers (3) zu stützen;
- einen Haltefuß (12), der mit dem Kopf (11) verbunden ist und sich entlang einer Hauptachse (A) erstreckt, wobei der Haltefuß (12) zum axialen Eindringen in eine Öffnung (31) des Trägers (3) konfiguriert ist, wobei die Öffnung einen Umfangsrand zum Anordnen der Befestigungsvorrichtung (1) in einer Einführposition auf diese Art aufweist, die eine erste Winkelausrichtung aufweist, wobei der Haltefuß (12) mindestens eine biegsame Rückhaltelasche (13) zum Sichstützen auf eine zweite Fläche des Trägers (3) vorweist, wenn die Befestigungsvorrichtung (1) winkelig von der Einführposition in eine Verriegelungsposition bewegt wird, die eine zweite Winkelausrichtung aufweist;
wobei die Befestigungsvorrichtung (1) **dadurch gekennzeichnet ist, dass** die biegsame Lasche (13) einen Vorsprung (15) zum Ausfüllen des Raums, der zwischen dem Haltefuß (12) und dem Rand der Öffnung (31) vorhanden sein kann, und Neuzentrieren auf diese Art der Befestigungsvorrichtung (1) in der Öffnung (31) trägt, wenn sie winkelig von der Einführposition in die Verriegelungsposition bewegt wird.

2. Befestigungsvorrichtung (1) nach dem vorstehenden Anspruch, wobei der Kopf (11) mindestens ein Blockierelement (16) umfasst, das dazu bestimmt ist, die Öffnung (31) des Trägers (3) zu besetzen, wenn die Befestigungsvorrichtung (1) in der Verriegelungsposition ist.

3. Befestigungsvorrichtung nach dem vorstehenden Anspruch, wobei das Blockierelement (16) in einem Winkel von 90° bezogen auf die biegsame Lasche (13) angeordnet ist.

4. Befestigungsvorrichtung (1) nach einem der Ansprüche 2 bis 3, wobei das Blockierelement (16) aus einem mit dem Haltefuß (13) verbundenen Paar paralleler Rippen besteht.

5. Befestigungsvorrichtung (1) nach einem der vorstehenden Ansprüche, wobei die Basis der biegsamen Rückhaltelasche (13) mit einer Platte (17) fest verbunden ist, die von der Außenoberfläche des Haltefußes (12) übersteht und in einer Ebene senkrecht zu der Hauptachse (A) angeordnet ist.

6. Befestigungsvorrichtung (1) nach einem der vorstehenden Ansprüche, wobei das Ende der biegsamen Lasche (13) frei ist und sich entlang einer Richtung senkrecht zu dem Träger (3) verformen kann.

7. Befestigungsvorrichtung (1) nach einem der vorstehenden Ansprüche, wobei die biegsame Lasche (13) eine zu der Platte (17) nicht orthogonale Ausgangsneigung besitzt.

8. Befestigungsvorrichtung (1) nach einem der vorstehenden Ansprüche, wobei der Haltefuß (12) mit mindestens einer Führungsrippe (14) versehen ist.

9. Befestigungsvorrichtung nach einem der vorstehenden Ansprüche, wobei der Vorsprung (15) eine Basis, die ihn mit der biegsamen Lasche (13) verbindet, und eine Spitze aufweist, wobei die Abmessung der Spitze kleiner als die Abmessung der Basis ist.

## Claims

1. Fastening device (1), of the quarter-turn type, for fastening a part (2) to a support (3), the fastening device (1) comprising:
- a head (11) carrying the part (2), the head (11) being intended to rest on a first face of the support (3);
- a supporting foot (12) connected to the head (11) and extending along a main axis (A), the supporting foot (12) being designed to axially penetrate an opening (31) in the support (3), the opening having a peripheral edge, so as to arrange the fastening device (1) in an insertion position having a first angular orientation, the supporting foot (12) comprising at least one flexible retaining tab (13) for resting on a second face of the support (3) when the fastening device (1) is angularly displaced from the insertion position to a locking position having a second angular orientation;
the fastening device (1) being **characterized in that** the flexible tab (13) carries a lug (15) for bridging the gap that may exist between the supporting foot (12) and the edge of the opening (31) and thus recentering the fastening device (1) in the opening (31) when it is angularly displaced from the insertion position to the locking position.

2. Fastening device (1) according to the preceding claim, wherein the head (11) comprises at least one blocking element (16) intended to occupy the opening (31) in the support (3) when the fastening device (1) is in the locking position.

3. Fastening device according to the preceding claim, wherein the blocking element (16) is arranged at an angle of 90° with respect to the flexible tab (13).

4. Fastening device (1) according to any of claims 2 to 3, wherein the blocking element (16) consists of a pair of parallel ribs connected to the supporting foot (13).

5. Fastening device (1) according to any of the preceding claims, wherein the base of the flexible retaining tab (13) is secured to a plate (17) that projects from the outer surface of the supporting foot (12) and is arranged in a plane perpendicular to the main axis (A).

6. Fastening device (1) according to any of the preceding claims, wherein the end of the flexible tab (13) is free and can be deformed in a direction perpendicular to the support (3).

7. Fastening device (1) according to any of the preceding claims, wherein the flexible tab (13) has an initial inclination that is not orthogonal to the plate (17).

8. Fastening device (1) according to any of the preceding claims, wherein the supporting foot (12) is provided with at least one guide rib (14).

9. Fastening device according to any of the preceding claims, wherein the lug (15) has a base connecting it to the flexible tab (13) and a top, the dimensions of the top being smaller than the dimensions of the base.
